# EUROPÄISCHE PATENTSCHRIFT

(11) **EP 0 676 143 B1**
(45) Veröffentlichungstag und Bekanntmachung des Hinweises auf die Patenterteilung: **15.09.1999**
(21) Anmeldenummer: 95102746.5
(22) Anmeldetag: 27.02.1995
(51) Int. Cl.: A22C 13/00

(54) **Cellulosehydrat-Nahrungsmittelhülle mit verbesserter Abschälbarkeit**
Cellulose hydrate based food casing having improved peelability
Enveloppe pelable pour aliments à base d'hydrate de cellulose

(30) Priorität: 04.03.1994 DE 4407288
(43) Veröffentlichungstag der Anmeldung: 11.10.1995
(73) Patentinhaber: HOECHST AKTIENGESELLSCHAFT, 65926 Frankfurt am Main (DE)
(72) Erfinder: Hammer, Klaus-Dieter, Dr., D-55120 Mainz (DE); Siebrecht, Manfred, Dr., D-65207 Wiesbaden-Naurod (DE); Krams, Theo, D-65197 Wiesbaden (DE)
(74) Vertreter: Zounek, Nikolai, Dipl.-Ing.

(56) Entgegenhaltungen:
- EP-A- 0 374 624
- EP-A- 0 468 284
- EP-A- 0 502 431
- EP-A- 0 502 432
- EP-A- 0 528 374
- DE-A- 1 492 708
- DE-A- 1 923 607
- DE-A- 2 409 612
- DE-A- 3 447 026
- FR-A- 2 209 513
- FR-A- 2 667 867

## Beschreibung

Die Erfindung betrifft eine Nahrungsmittelhülle auf Cellulosehydratbasis, die eine verbesserte Schälbarkeit aufweist, sowie ihre Verwendung als Wursthülle.

Flächenförmige, insbesondere bahn- und blattförmige, sowie schlauchförmige Nahrungsmittelhüllen auf der Basis von Cellulosehydrat werden für gewöhnlich nach dem Viskoseverfahren hergestellt. Dabei wird eine als "Viskoselösung" bezeichnete alkalische Cellulosexanthogenat-Lösung durch eine ring- oder schlitzförmige Düse extrudiert, in saurer Lösung als Cellulosehydrat-Gel koaguliert und zu Cellulosehydrat regeneriert. Durch Verändern der Viskosezusammensetzung und Einarbeiten von Additiven lassen sich die Eigenschaften der Nahrungsmittelhülle variieren. Diese Veränderungen können sowohl an verstärkten als auch an unverstärkten Hüllen durchgeführt werden. Unverstärkte Cellulosehydrathüllen werden als Zellglasfolien bezeichnet und sind als ^{(R)}Cellophan bekannt. Indem eine oder beide Seiten eines bahn- oder schlauchförmigen Fasergerüstes mit einer Viskoselösung beschichtet, imprägniert und anschließend mit einer Koagulations- und Regenerierlösung behandelt werden, erhält man faserverstärkte Nahrungsmittelhüllen. Solche Hüllen werden besonders für natur- und schimmelgereifte Dauerwurst eingesetzt.

Nahrungsmittelhüllen erfüllen wichtige Funktionen bei der Herstellung, Reifung und Aufbewahrung der Wurst. Sie müssen geschmeidig, ausreichend dehnfähig und lange lagerfähig sein.

Die Geschmeidigkeit und Verarbeitungsfähigkeit der Hülle wird üblicherweise durch sekundäre Weichmacher, wie Glycerin, Glykol oder Polyglykol verbessert. Die sekundären Weichmacher sind nicht kovalent, sondern nur durch intermolekulare Kräfte an das Cellulosehydrat gebunden. Beim Wässern der Hülle vor dem Befüllen oder beim Brühen oder Kochen der Wurst werden sie praktisch vollständig herausgelöst. Die Folge davon ist ein Schrumpfen, Verdichten und Verspröden der Hülle nach dem Trocknen der Wurst. Durch das Schrumpfen kann der Innendruck der Wurst auf unerwünscht hohe Werte ansteigen, die die Würste zum Platzen bringen. Diese Erscheinungen sind auf eine Kristallisation des Cellulosehydrats zurückzuführen.

Um die Kristallisationsneigung zu vermindern, werden der Viskoselösung noch sogenannte "primäre" Weichmacher zugefügt, die eine permanente Weichmachung bewirken. Als primäre Weichmacher werden Verbindungen eingesetzt, die mit den Cellulosemolekülen reagieren, wie N-(C₉-C₂₄)Alkyl-N,N',N'-tris-hydroxymethyl-harnstoff oder ähnliche Verbindungen mit langen aliphatischen Kohlenstoffketten. Aber auch nicht-reaktive Verbindungen, wie Di- und Polyhydroxyverbindungen, die mit langkettigen aliphatischen Monocarbonsäuren verestert sind, oder Polymere auf Alkylenoxidbasis mit wenigstens einer N-Hydroxymethyl-carbamat-Gruppe werden verwendet.

Eine Wursthülle auf Cellulosehydratbasis, deren innere Oberfläche nicht imprägniert ist, haftet bei Brühwurst allgemein so fest, daß sie sich nicht abziehen läßt ohne dabei gleichzeitig die Bratoberfläche aufzureißen. Bei Dauerwurst haftet sie dagegen so gering, daß sie sich während des Reifens von der Brätoberfläche ablöst (sie "stellt ab"), nicht mitschrumpft und Falten bildet, unter denen sich Schimmel entwickeln kann.

Hüllen für Brühwürste wurden daher innen mit Trennmitteln präpariert. Für solche Trennpräparationen sind beispielsweise Chromfettsäure-Komplexe (US-A 2 901 358), Gemische aus einer niederen Alkylcellulose und dem Dimer eines höheren Ketens (DE-A 14 92 699), fluorierte, vernetzte Polymere (DE-A 22 59 671 = GB-A 1 440 486) und Gemisch aus Lecithin und Alginat, Chitosan und/oder Gasen verwendet worden.

Als Haftimprägnierung für Dauerwürste dienten insbesondere Gelatine (DE-C 609 129 = US-A 1 978 774), Epichlorhydrin-Polyamid-Harze (DE-A 14 92 708) und Chitosan (DE-A 41 27 604).

Um zu verhindern, daß die Haftkomponente der Innenimprägnierung mit dem Cellulosematerial der Hülle in unerwünschter Weise reagiert, wurde der Imprägnierung ein natürliches Öl, ein synthetisches Triglyceridgemisch mit pflanzlichen Fettsäuren einer Kohlenstoffkettenlänge im Bereich von 4 bis 14 Kohlenstoffatomen, ein Paraffinöl und/oder ein Siliconöl zugesetzt. Daneben konnte noch ein Emulgator für das Öl vorhanden sein.

In der EP-A 502 431 ist eine schlauchförmigen Nahrungsmittelhülle auf der Basis von Cellulose offenbart, die zur Verbesserung der Hafteigenschaften auf der Innenseite imprägniert ist. Die Hülle ist besonders geeignet für zweitverpackte oder getauchte Dauerwurst. Die Imprägnierung enthält eine Kombination von Lecithin mit Alginat und/oder Chitosan und/oder Casein. Lecithin besitzt zwar eine hohe Affinität zu der Cellulose, reagiert jedoch nicht damit und ist deswegen auch nicht fest an die Hülle gebunden.

In der EP-A 502 432 ist ebenfalls eine schlauchförmige Wursthülle auf Basis von Cellulose beschrieben, die zur Verbesserung der Abschälbarkeit vom Wurstbrät auf ihrer Innenseite eine Imprägnierung aufweist. Zum Imprägnieren werden Alginate, Alginsäure, Chitosane oder eine Kombination davon verwendet. Zusätzlich können auch noch Trennmittel, wie Öle oder Wachse, vorhanden sein.

Spezielle Rohwurstsorten, wie Pfeffersalami, die mit einer Pfeffer/Gelatine-Schicht überzogen ist, stellen jedoch besondere Anforderungen an die Wursthülle. Rohwürste die in Selbstbedienungsläden verkauft werden sollen, werden aus hygienischen Gründen häufig mit einer Folie zweitverpackt. Sie können auch mit einer - in der Regel transparenten - Tauchmasse überzogen sein. Solche Überzüge, die z.B. aus Polyvinylalkohol bestehen, werden auf die bereits fertig gereiften Würste aufgebracht. Bekannte, mit Haftimprägnierungen ausgestattete Wursthüllen zeigen nach dem Tauchen eine zu starke Haftung an dem Wurstbrät, während die mit Trennpräparationen ausgestatteten bereits während des Reifens abstellen. Durch die Zweitverpackung oder durch die Tauchbeschichtung wird unter anderem der Wasserhaushalt der Wurst verändert, was die Haftung zwischen Brätoberfläche und Hülle beeinflußt.

Ausgehend davon ergab sich die Aufgabe, eine innen imprägnierte Nahrungsmittelhülle zur Verfügung zu stellen, die diese Anforderungen erfüllt. Sie soll gewährleisten, daß die Hülle während Herstellung und Lagerung nicht vom Brät abstellt, sich andererseits aber auch noch nach dem Zweitverpacken oder Überziehen mit Tauchmassen leicht schälen läßt.

Gelöst wird die Aufgabe durch eine Nahrungsmittelhülle auf der Basis von Cellulosehydrat, die dadurch gekennzeichnet ist, daß sie innen imprägniert ist mit einem Gemisch, das 40 bis 200 mg/m² einer Haftkomponente und 20 bis 2.000 mg/m² einer Trennkomponente enthält, wobei die Haftkomponente an die Cellulose kovalent gebunden ist und die Trennkomponente mit der Cellulose reagiert, mit der Maßgabe, daß das Gewichtsverhältnis von Haft- zu Trennkomponente zwischen 4 : 1 und 1 : 4 liegt.

Die Nahrungsmittelhülle ist vorzugsweise mit Fasern, insbesondere mit Hanffasern, verstärkt.

Die Haftkomponente ist vorzugsweise ein natürliches Eiweiß, wie Casein, Gelatine, Weizenprotein oder Sojaprotein. Diese Proteine werden über Mono- oder Dialdehyde an die Cellulose kovalent gebunden. Geeignet ist auch Chitosan, das sich ebenfalls über Aldehyde binden läßt. Schließlich sind auch Aminoplast-Vorkondensate und Polyamin-Polyamid-Epichlorhydrin-Harze einsetzbar.

Das Trennmittel ist vorzugsweise ein Chromfettsäure-Komplex (^{(R)}Quilon) oder ein Diketen mit langkettigen, fettähnlichen Substituenten (^{(R)}Aquapel). Das Diketen ist das Dimere eines Ketens der Formel RR'C=C=O, worin die Reste R und R' gleich oder verschieden sind und für Wasserstoff, (C₄-C₂₀)Alkyl, (C₄-C₂₀)Cycloalkyl, (C₆-C₂₀)Aryl oder (C₇-C₂₀)Aralkyl stehen, mit der Maßgabe, daß R und R' nicht gleichzeitig Wasserstoff sind. Bevorzugt sind Diketene der angegebenen Formel, in denen einer der Reste R und R' für Alkyl, insbesondere für unverzweigtes (C₈-C₂₀)Alkyl steht. Die Trennmittel, sind so gewählt daß sie mit der Cellulose reagieren, wie das genannte Diketen oder der Chromfettsäure-Komplex.

Die Haftkomponente ist in der Innenbeschichtung vorzugsweise in einer Menge von 50 bis 150 mg/m² enthalten.

Die Trennkomponente ist in der Innenbeschichtung vorzugsweise in einer Menge von 50 bis 1.200 mg/m² enthalten.

Durch Verändern des Verhältnisses von Haft- zu Trennkomponente läßt sich die Affinität der Wursthülle zur Brätoberfläche dem jeweiligen Verwendungszweck anpassen. Die erfindungsgemäßen Nahrungsmittelhüllen werden vor allem als Wursthüllen bei der Herstellung von Rohwürsten, insbesondere Dauerwürsten, die mit Folie zweitverpackt oder mit einer Tauchmasse überzogen sind, verwendet.

Bei Dauerwürsten, die nach dem Reifen in Folie zweitverpackt oder nach dem Abziehen der Hülle mit Gelatine und dann mit Pfeffer überzogen werden sollen, wird eine Schälbarkeit von 1 bis 1,5 verlangt (Bewertungsmaßstab siehe nachfolgendes Beispiel 1). Für "getauchte" Würste ist eine etwas stärkere Haftung von 1,5 bis 1,75 erwünscht.

Vorzugsweise enthält die Innenbeschichtung keine weiteren Bestandteile neben den genannten.

Es war überraschend, daß sich die gestellte Aufgabe mit einer solchen Hülle lösen ließ, da bisher stets angenommen worden war, schon der Zusatz einer geringen Menge einer Trennkomponente zu einer Haftimprägnierung müsse unweigerlich zum Abstellen der Hülle während des Reifens der Dauerwurst führen. Dieser unerwünschte Effekt tritt jedoch bei den erfindungsgemäßen Wursthüllen nicht auf.

Zur Herstellung der erfindungsgemäßen Nahrungsmittelhüllen wird in den Schlauch einer faserverstärkten Cellulosehülle eine wäßrige Lösung, die eine Trenn- und eine Haftkomponente sowie gegebenenfalls weitere übliche Zusätze enthält, eingefüllt und anschließend mit einem Walzenpaar abgequetscht.

### Beispiel 1

Ein 21 g-Hanffaserpapier wurde zu einem Schlauch mit einem Durchmesser von 75 mm (Kaliber 75) geformt und außen mit einer Viskoselösung beschichtet. Der Schlauch passierte dann die üblichen Spinn-, Fäll- und Waschkufen. Vor dem Eintritt in den Trockner wurden dann 10 l einer Lösung bestehend aus
- 4,68 l: Wasser,
- 4,29 l: einer 7,6 gew.-%igen wäßrigen Lösung eines Diketens aus (C₁₆-C₁₈)Alkylketen (^{(R)}Aquapel x S360, Hercules Inc.),
- 0,40 kg: Milcheiweiß (^{(R)}Rovita),
- 0,40 l: Glycerin,
- 0,19 l: einer 4 gew.-%igen wäßrigen NaOH-Lösung und
- 0,033 l: einer 40 gew.-%igen wäßrigen Glyoxal-Lösung
in den Schlauch eingefüllt und über ein Walzenpaar abgequetscht. Anschließend wurde der Schlauch im aufgeblasenem Zustand getrocknet, befeuchtet bis er 8 bis 10 Gew.-% an Wasser aufwies, und anschließend aufgewickelt.

Die Innenbeschichtung enthielt 105 mg/m² an Casein und wies eine Oberflächenspannung von 34 mN/m auf.

Die faserverstärkte Cellulosehülle wurde gerafft und dann mit einer automatischen Vorrichtung mit Dauerwurstbrät gefüllt. Die Schälbarkeit der fertig gereiften Dauerwurst lag bei 1,75. Nachdem die Wurst mit einer Tauchmasse überzogen war, lag sie bei 1,5.

Der Bewertung wurde ein Maßstab von 1 bis 5 mit folgenden Bedeutungen zugrunde gelegt:
- < 1:: die Hülle stellt ab;
- 1:: sehr schwache Haftung;
- > 3:: Haftung ist bereits so stark, daß die Brätoberfläche beim Abziehen aufgerissen wird;
- 5:: Hülle läßt sich nicht mehr zerstörungsfrei abziehen.

### Beispiel 2

Ein 17 g-Hanffaserpapier wurde zu einem Schlauch vom Kaliber 60 geformt und außen mit einer Viskoselösung beschichtet. Der Schlauch passierte dann die üblichen Spinn-, Fäll- und Waschkufen. Vor dem Eintritt in den Trockner wurden dann 10 l einer Lösung bestehend aus
- 6,08 l: Wasser,
- 3,076 l: einer 39 gew.-%igen wäßrigen Polyethylen-Dispersion (^{(R)}Epotal 181D, BASF AG),
- 0,30 kg: Milcheiweiß (FN4),
- 0,40 l: Glycerin,
- 0,12 l: einer 4 gew.-%igen wäßrigen NaOH-Lösung und
- 0,025 l: einer 40 gew.-%igen wäßrigen Glyoxal-Lösung
in den Schlauch eingefüllt und über ein Walzenpaar abgequetscht. Anschließend wurde der Schlauch im aufgeblasenem Zustand getrocknet, befeuchtet bis er 8 bis 10 Gew.-% an Wasser aufwies, und anschließend aufgewickelt.

Die Innenbeschichtung enthielt 68 mg/m² an Casein und wies eine Oberflächenspannung von 34 mN/m auf.

Die faserverstärkte Cellulosehülle wurde gerafft und dann mit einer automatischen Vorrichtung mit Dauerwurstbrät gefüllt. Die Schälbarkeit der fertig gereiften Dauerwurst lag bei 1 bis 1,5. Nach dem Entfernen der Zweitverpackung lag sie bei 1.

### Beispiel 3

Ein 21 g-Hanffaserpapier wurde zu einem Schlauch vom Kaliber 80 geformt und außen mit einer Viskoselösung beschichtet. Der Schlauch passierte dann die üblichen Spinn-, Fäll- und Waschkufen. Vor dem Eintritt in den Trockner wurden dann 10 l einer Lösung bestehend aus
- 8,39 l: Wasser,
- 0,60 l: Lecithin 250 W,
- 0,40 kg: Milcheiweiß (FN4),
- 0,40 l: Glycerin,
- 0,21 l: einer 4 gew.-%igen wäßrigen NaOH-Lösung,
- 0,033 l: einer 40 gew.-%igen wäßrigen Glyoxal-Lösung und
- 0,0058 l: ethoxyliertes Isotridecanol (durchschnittlich 8 Ethylenoxid-Einheiten; ^{(R)}Genapol X-080 der Hoechst AG)
in den Schlauch eingefüllt und über ein Walzenpaar abgequetscht. Anschließend wurde der Schlauch im aufgeblasenem Zustand getrocknet, befeuchtet bis er 8 bis 10 Gew.-% an Wasser aufwies, und anschließend aufgewickelt. Die Innenbeschichtung enthielt 70 mg/m² an Casein und 127 mg/m² an Lecithin und wies eine Oberflächenspannung von 34 mN/m auf.

Die faserverstärkte Cellulosehülle wurde gerafft und dann mit einer automatischen Vorrichtung mit Dauerwurstbrät gefüllt. Die Schälbarkeit der fertig gereiften Dauerwurst lag bei 1,75. Nach dem Überziehen mit einer Tauchmasse lag sie bei 2,0.

### Beispiel 4

Ein 21 g-Hanffaserpapier wurde Zu einem Schlauch vom Kaliber 75 geformt und außen mit einer Viskoselösung beschichtet. Der Schlauch passierte dann die üblichen Spinn-, Fäll- und Waschkufen. Vor dem Eintritt in den Trockner wurden dann 10 l einer Lösung bestehend aus
- 7,46 l: Wasser,
- 1,54 l: einer 39 gew.-%igen wäßrigen Polyethylen-Dispersion (^{(R)}Epotal 181D, BASF),
- 0,40 kg: Casein,
- 0,40 l: Glycerin,
- 0,17 l: einer 4 gew.-%igen wäßrigen NaOH-Lösung und
- 0,033 l: einer 40 gew.-%igen wäßrigen Glyoxal-Lösung
in den Schlauch eingefüllt und über ein Rollenpaar abgequetscht. Anschließend wurde der Schlauch im aufgeblasenem Zustand getrocknet, befeuchtet bis er 8 bis 10 Gew.-% an Wasser aufwies, und anschließend aufgewickelt. Die Innenbeschichtung enthielt 78 mg/m² an Casein und wies eine Oberflächenspannung von 36 mN/m auf.

Die faserverstärkte Cellulosehülle wurde gerafft und dann mit einer automatischen Vorrichtung mit Dauerwurstbrät gefüllt. Die Schälbarkeit der fertig gereiften Dauerwurst lag bei 1,5. Nach dem Überziehen mit einer Tauchmasse lag sie bei 1,75.

## Patentansprüche

1. Nahrungsmittelhülle auf der Basis von Cellulosehydrat, dadurch gekennzeichnet, daß sie innen imprägniert ist mit einem Gemisch, das 40 bis 200 mg/m² einer Haftkomponente und 20 bis 2.000 mg/m² einer Trennkomponente enthält, wobei die Haftkomponente an die Cellulose kovalent gebunden ist wird die Trennkomponente mit der Cellulose reagiert, mit der Maßgabe, daß das Gewichtsverhältnis von Haft- zu Trennkomponente zwischen 4 : 1 und 1 : 4 liegt.

2. Nahrungsmittelhülle gemäß Anspruch 1, dadurch gekennzeichnet, daß die Haftkomponente ein natürliches Eiweiß, Chitosan, ein Aminoplast-Vorkondensat oder ein Polyamin-Polyamid-Epichlorhydrin-Harz ist.

3. Nahrungsmittelhülle gemäß Anspruch 1 oder 2, dadurch gekennzeichnet, daß das Trennmittel ein Chromfettsäure-Komplex oder ein Diketen mit langkettigen, fettähnlichen Substituenten ist.

4. Nahrungsmittelhülle gemäß einem oder mehreren der Ansprüche 1 bis 3, dadurch gekennzeichnet, daß die Haftkomponente in der Innenbeschichtung in einer Menge von 50 bis 150 mg/m² enthalten ist.

5. Nahrungsmittelhülle gemäß einem oder mehreren der Ansprüche 1 bis 4, dadurch gekennzeichnet, daß die Trennkomponente in der Innenbeschichtung in einer Menge von 50 bis 1.200 mg/m² enthalten ist.

6. Nahrungsmittelhülle gemäß einem oder mehreren der An sprüche 1 bis 5, dadurch gekennzeichnet, daß sie mit Fasern, insbesondere mit Hanffasern, verstärkt ist.

7. Verwendung der Nahrungsmittelhüllen gemäß Anspruch 1 bis 6 als Wursthüllen.

8. Verwendung der Nahrungsmittelhülle gemäß einem oder mehreren der Ansprüche 1 bis 6 zur Herstellung von Rohwürsten, insbesondere Dauerwürsten, die mit Folie zweitverpackt oder mit einer Tauchmasse überzogen sind.

## Claims

1. A foodstuff casing based on cellulose hydrate, which has an internal impregnation comprising a mixture which contains 40 to 200 mg/m² of an adhesive component and 20 to 2,000 mg/m² of a non-stick component, whereby the adhesive component is covalently bonded to the cellulose and the non-stick component is reacting with the cellulose, with the proviso that the ratio by weight of adhesive to non-stick component is between 4:1 and 1:4.

2. A foodstuff casing as claimed in claim 1, wherein the adhesive component is a natural protein, chitosan, an aminoplastic precondensate or a polyamine/ polyamide/epichlorohydrin resin.

3. A foodstuff casing as claimed in claim 1 or 2, wherein the non-stick composition is a chromium/fatty acid complex or a diketene with long-chain, fat-like substituents.

4. A foodstuff casing as claimed in one or more of claims 1 to 3, wherein the adhesive component is present in the internal coating in an amount of 50 to 150 mg/m².

5. A foodstuff casing as claimed in one or more of claims 1 to 4, wherein the non-stick component is present in the internal coating in an amount of 50 to 1200 mg/m².

6. A foodstuff casing as claimed in one or more of claims 1 to 5, which is reinforced with fibers, in particular with hemp fibers.

7. The use of the foodstuff casings as claimed in claim 1 to 6 as sausage casings.

8. The use of the foodstuff casing as claimed in one or more of claims 1 to 6 for the production of uncooked sausages, in particular long-life sausages, which have a second packaging in the form of a film or are coated with a dip-coating composition.

## Revendications

1. Enveloppe pour produit alimentaire à base d'hydrate de cellulose, caractérisée en ce qu'elle est imprégnée sur sa face interne avec un mélange qui contient de 40 à 200 mg/m² d'un composant d'adhérence et de 20 à 2 000 mg/m² d'un composant de séparation, le composant d'adhérence étant lié par covalence à la cellulose et le composant d'adhérence réagissant avec la cellulose, étant entendu que le rapport pondéral du composant d'adhérence au composant de séparation est compris entre 4:1 et 1:4.

2. Enveloppe pour produit alimentaire selon la revendication 1, caractérisée en ce que le composant d'adhérence est une protéine naturelle, le chitosane, un produit de précondensation d'aminoplaste ou une résine polyamine/polyamide/épichlorhydrine.

3. Enveloppe pour produit alimentaire selon la revendication 1 ou 2, caractérisée en ce que l'agent de séparation est un complexe acide gras-chrome ou un dicétène à substituants aliphatiques à longue chaîne.

4. Enveloppe pour produit alimentaire selon une ou plusieurs des revendications 1 à 3, caractérisée en ce que le composant d'adhérence est contenu dans le revêtement interne en une quantité de 50 à 150 mg/m².

5. Enveloppe pour produit alimentaire selon une ou plusieurs des revendications 1 à 4, caractérisée en ce que le composant de séparation est contenu dans le revêtement interne en une quantité de 50 à 1 200 mg/m².

6. Enveloppe pour produit alimentaire selon une ou plusieurs des revendications 1 à 5, caractérisée en ce qu'elle est renforcée avec des fibres, en particulier avec des fibres de chanvre.

7. Utilisation des enveloppes pour produits alimentaires selon les revendications 1 à 6, en tant qu'enveloppes pour saucisses.

8. Utilisation de l'enveloppe pour produit alimentaire selon une ou plusieurs des revendications 1 à 6, pour la fabrication de saucisses crues, en particulier de saucissons secs, qui sont doublement emballés avec une pellicule ou enrobés avec une matière de trempage.
